# EUROPEAN PATENT APPLICATION

(11) **EP 1 746 533 A1**
(43) Date of publication of application: **24.01.2007**
(21) Application number: 05014558.0
(22) Date of filing: 05.07.2005
(51) Int. Cl.: G06Q 10/00, H04L 12/58

(54) **System and method of producing e-mail**

(71) Applicant: Wu, Chao-Hung, Hsin-Tien City, Taipei (TW)
(72) Inventor: Wu, Chao-Hung, Hsin-Tien City, Taipei (TW)
(74) Representative: Viering, Jentschura & Partner

(57) **Abstract**

A system and method of producing E-mail reduce the time consumed for producing E-mail. The system of producing E-mail has a storage module, a selecting module, a producing module and a text input module. The selecting module selects data stored in the storage module, the storage module stores the subject and content required for the E-mail respectively in databases, and the producing module controls the selecting module to select a predetermined subject template and a predetermined content template to produce an E-mail. The text input module allows users to input textual information, and the producing module integrates the textual information input by the text input module into the E-mail.

## Description

### BACKGROUND OF THE INVENTION

### 1. Field of the Invention

The present invention relates to a system and method of producing E-mail, and more particularly to a system and method for producing the contents of an E-mail.

### 2. Description of Related Art

As the Internet becomes increasingly popular, information transmissions via Internet are substantially replacing traditional letters, in which E-mail transmission technology is the most popular technology and extensively used by companies, households and individuals. E-mail is so popular mainly because it includes the advantages of providing a quick, convenient and boundaryless transmission, and the transmitted content may include multimedia information and a huge quantity of data that can be transmitted at the same time. These advantages make E-mail an indispensable important transmission medium for the information era.

As to the present way of sending information via E-mail, such as the E-mail system Outlook Express introduced by Microsoft, related information must be entered and set for an E-mail first, if E-mail is to be sent. For example, the sender's E-mail address must be selected first, and then the subject and content of the E-mail must be entered, and finally at least one receiver must be specified. After the foregoing information is entered, an E-mail can be sent successfully to a receiver. However, the subject or content of an email may be used repeatedly in some occasions, and it is a waste of time to enter repeatedly the same information. For example, a customer service personnel replies to a customer's questions via email, and the answers to these questions from different customers may be the same. The customer service personnel thus has to enter the same subject and content to reply to different customers. The same issue may occur in different occasions and to different people, and thus the present way of producing an E-mail creates some problems for users, since users have to enter the subject and content of an E-mail to produce the E-mail.

### SUMMARY OF THE INVENTION

To overcome the aforementioned technical issues, the present invention provides a system and method of producing E-mail for producing an E-mail quickly to reduce the time and episodes of entering the related information of an E-mail.

To overcome the aforementioned technical issues, the present invention comprises an E-mail producing system, a subject database for storing a plurality of subject templates, an E-mail content database for storing a plurality of content templates, a selecting module for selecting the content in the subject database and the E-mail content database, and a producing module for controlling the selecting module to select one of the predetermined subject templates and one of the predetermined content template to produce an E-mail.

To overcome the aforementioned technical issues, the present invention provides a method of producing an E-mail. The method comprises the steps of selecting one of the predetermined subject templates for the E-mail; selecting one of the predetermined content templates for the E-mail; and producing the E-mail according to the selected results. The selected subject template is used as the subject of the E-mail and the selected content template is used as the content of the E-mail.

In the system and method of producing E-mail in accordance with the present invention, the common information entered for an email is pre-stored in different databases. If a user wants to prepare an E-mail, each item entered in the E-mail, such as the subject or content of the E-mail, will be selected from the corresponding databases so as to complete quickly the production of an E-mail and reduce the time consumed in E-mail generation.

### BRIEF DESCRIPTION OF THE DRAWINGS

The foregoing aspects and many of the attendant advantages of this invention will be more readily appreciated as the same becomes better understood by reference to the following detailed description, when taken in conjunction with the accompanying drawings, wherein:
Fig. 1 is a schematic diagram of a system architecture according to a preferred embodiment of the present invention;
Fig. 2 is a flow chart of producing a new E-mail according to a preferred embodiment of the present invention;
Fig. 3 is a flow chart of replying/forwarding an E-mail according to a preferred embodiment of the present invention;
Fig. 4 is a flow chart of producing an E-mail by a directory according to a preferred embodiment of the present invention; and
Fig. 5 is a schematic view of an E-mail of the present invention.

### DETAILED DESCRIPTION OF PREFERRED EMBODIMENTS

To make it easier for our examiner to understand the innovative features and technical content, we use a preferred embodiment together with the attached drawings for the detailed description of the invention, but it should be pointed out that the attached drawings are provided for reference and description but not for limiting the present invention.

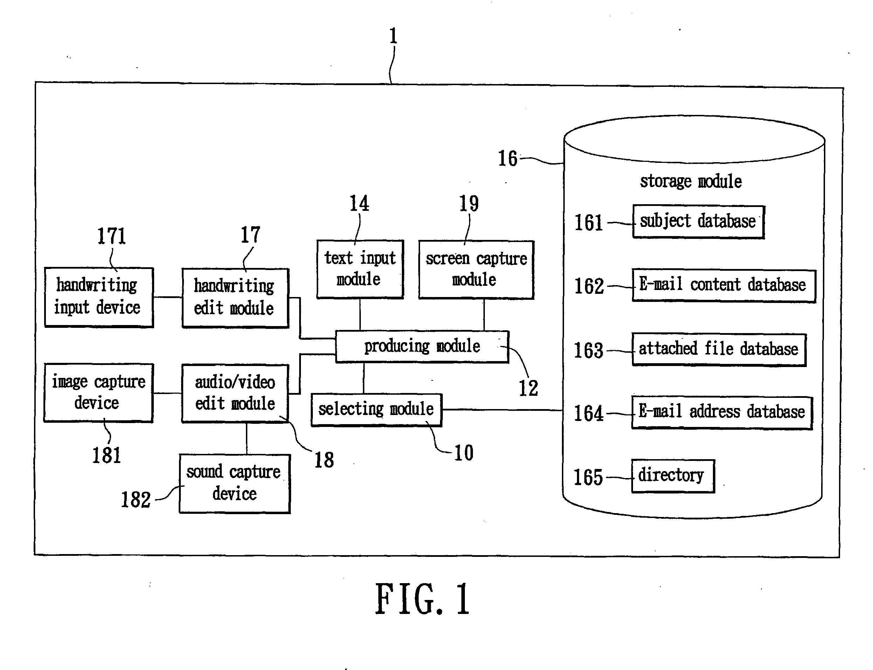

Reference is made to Fig. 1 for the schematic view of a system architecture of the present invention. This embodiment provides an E-mail producing system 1 for users to produce quickly an E-mail, and prepares the related data templates such as E-mail subject and E-mail content for user selection. The E-mail producing system 1 comprises a selecting module 10, a producing module 12, a text input module 14, a storage module 16, a handwriting edit module 17, an audio/video edit module 18 and a screen capture module 19. The storage module 16 further comprises a subject database 161, an E-mail content database 162, an attached file database 163, an E-mail address database 164 and a directory 165.

The information stored in the storage module 16 is the items to be entered for an E-mail. These items include a plurality of predetermined subject templates stored in the subject database 161, a plurality of predetermined content templates stored in the E-mail content database 162, a plurality of attached file templates stored in the attached file database 163, a plurality of E-mail addresses stored in the E-mail address database 164, and a plurality of receiver name lists stored in the directory 165.

The predetermined subject templates and predetermined content templates provided in this embodiment can be further stored in a public area and a private area. The public area refers to an E-mail server (not shown in the figure) that provides the predetermined subject templates and predetermined content templates, so that users can log onto the E-mail server to obtain these templates. The private area refers to a user's computer that stores the predetermined subject templates and predetermined content templates, so that users can obtain these templates directly from their own computer.

The data stored in different databases of the storage module 16 are selected by the selecting module 10. For example, the selecting module 10 selects one of the subject templates from the subject database 161 as the subject of the E-mail. In the actual selection process, the plurality of subject templates stored in the subject database 161 is integrated into a menu, so that the selecting module 10 can select the desired subject template on this menu. The data selections for other database are similar to those for the subject database 161.

The producing module 12 uses the selected results of the selecting module 10 to produce a complete E-mail. The selected results of the selecting module 10 go with the actual process of the producing module 12. A subject template is selected from the subject database 161 as the subject of the E-mail. A content template is selected from the E-mail content database 162 as the content of the E-mail. At least one attached file template is selected from the attached file database 163 as the attached data of the E-mail. An E-mail address is selected from the E-mail address database 164 as the sender's E-mail address for sending the E-mail. At least a name list is selected from the directory 165 as the name list of the E-mail receivers.

In addition to selecting the related information by the storage module 16 from the selecting module 10 according to this embodiment, the subject templates and content templates can be produced by other methods such as a text input module 14 for entering texts, a handwriting edit module 17 for entering handwriting signals, an audio/video edit module 18 for entering audio/video signals, and a screen capture module 19 for capturing the operating screen to make the background of the E-mail, and using the producing module 12 to control the input information and integrate the information into the E-mail.

The text input module 14 of this embodiment is provided for users to enter textual information and allow users to enter their desired textual information for the subject, content, receiver, and other items. The producing module 12 can integrate the textual information entered by the text input module 14 into the E-mail.

If the handwriting edit module 17 of this embodiment is executed, the handwriting input device 171 will be activated to capture a handwriting signal entered by a user. The handwriting edit module 17 will convert the handwriting signal into a digital signal readable by a computer, and then the producing module 12 attaches the digital signal to the screen of the E-mail. The handwriting signal can be considered the content of the E-mail.

If the audio/video edit module 18 of this embodiment is executed, the image capture device 181 and the sound capture device 182 are activated to capture the input of video signals and audio signals, such as, for example, capturing the user's screen image and sound. The audio/video edit module 18 integrates the video signals and audio signal into an audio/video file, and then the producing module 12 attaches the audio/video file to the E-mail. Users can thus complete the content of an E-mail by producing an audio/video file.

The screen capture module 19 of this embodiment provides an operating screen capture, so that if the producing module 12 is preparing a new E-mail, the screen capture module 19 will capture the current operating screen of a display desktop of the computer and display the operating screen as a graphic file. If the producing module 12 is replying to or forwarding an E-mail, the screen capture module 19 will capture the whole content of the original E-mail as a graphic file and use it as the operating screen. The operating screen of this embodiment can be used as a background of the handwriting signal entered by the handwriting edit module 17.

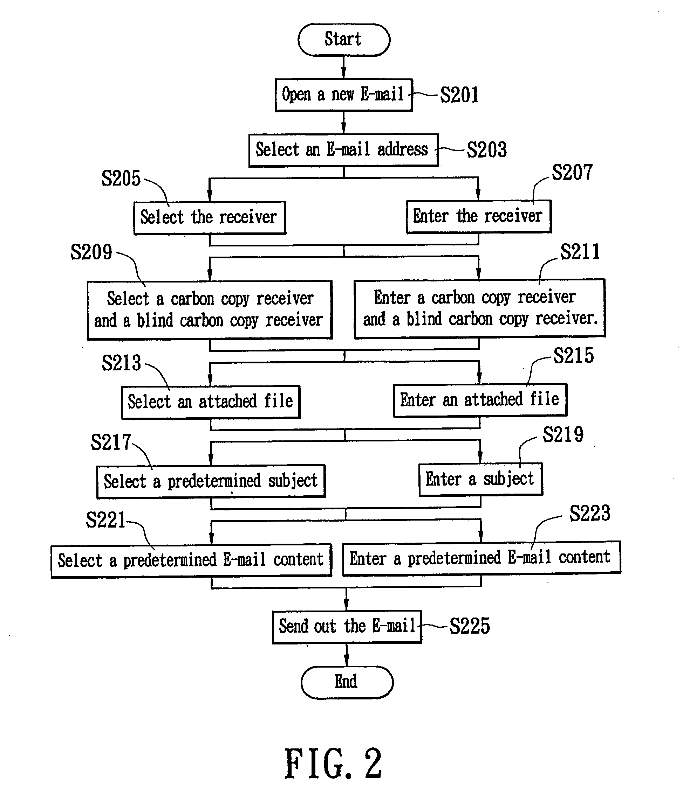

Reference is made to Fig. 2 for the flow chart of producing a new E-mail according to the preferred embodiment. In Fig. 2, the flow chart comprises the steps of (S201) opening a new E-mail; (S203) using the selecting module 10 to select one of a plurality of E-mail address templates stored in the E-mail address database 164 as the sender's E-mail address of the E-mail; and (S205) using the selecting module 10 to select one of a plurality of receiver's name lists in the directory 165 as the receiver's E-mail address for this E-mail; or (S207) using the text input module 14 to enter directly the receiver's information for the receiver item of the E-mail, with the foregoing receiver item represented by a receiver's E-mail address.

After the execution of Step (S202) or Step (S207) is completed, the method further comprises the step of (S209) using the selecting module 10 to select one of a plurality of mail lists in the directory 165 as a carbon copy (cc) receiver or a blind carbon copy (bcc) receiver of the E-mail; or (S211) using the text input module 14 to enter directly the carbon copy receiver and the blind carbon copy receiver for the receivers of the E-mail.

After the execution of Step (S209) or Step (S211) is completed, the method further comprises the step of (S213) using the selecting module 10 to select at least one of a plurality of attached file templates stored in the attached file database 163 as the attachment of the E-mail; or (S215) directly entering the attached data from a computer as the attachment of the E-mail.

After the execution of Step (S213) or Step (S215) is completed, the method further comprises a step of (S217) using the selecting module 10 to select one of a plurality of subject templates stored in the subject database 161 as the subject of the E-mail; or (S219) using the text input module 14 to enter directly the subject name to the subject item of the E-mail.

After the execution of Step (S217) or Step (S219) is completed, the method further comprises a step of (S221) using the selecting module 10 to select one of the plurality of content templates stored in the E-mail content database 162 as the E-mail content of the E-mail; or (223) using the text input module 14, handwriting edit module 17, audio/video edit module 18 and/or screen capture module 19 to enter directly the content in the E-mail content item of the E-mail.

After all of the abovementioned selections or entries are completed, the method further comprises a step (S225) of using the producing module 12 to complete the E-mail according to the aforementioned selections or entries and send out the E-mail. The method of using the producing module 12 to produce an E-mail according to this embodiment comprises the steps of selecting a subject template from the subject database 161 or entering the subject by a user as the subject of the E-mail; selecting a content template from the E-mail content database 162 or entering the content by a user as the content of the E-mail; selecting at least one attached file template stored in the attached file database 163 or entering the attached file by a user as the attachment of the E-mail; selecting an E-mail address from the E-mail address database 164 as the sender's E-mail address of the E-mail; and selecting a mail list from the directory 165 or a receiver's data entered by a user as the receiver, carbon copy receiver, or blind carbon copy receiver of the E-mail.

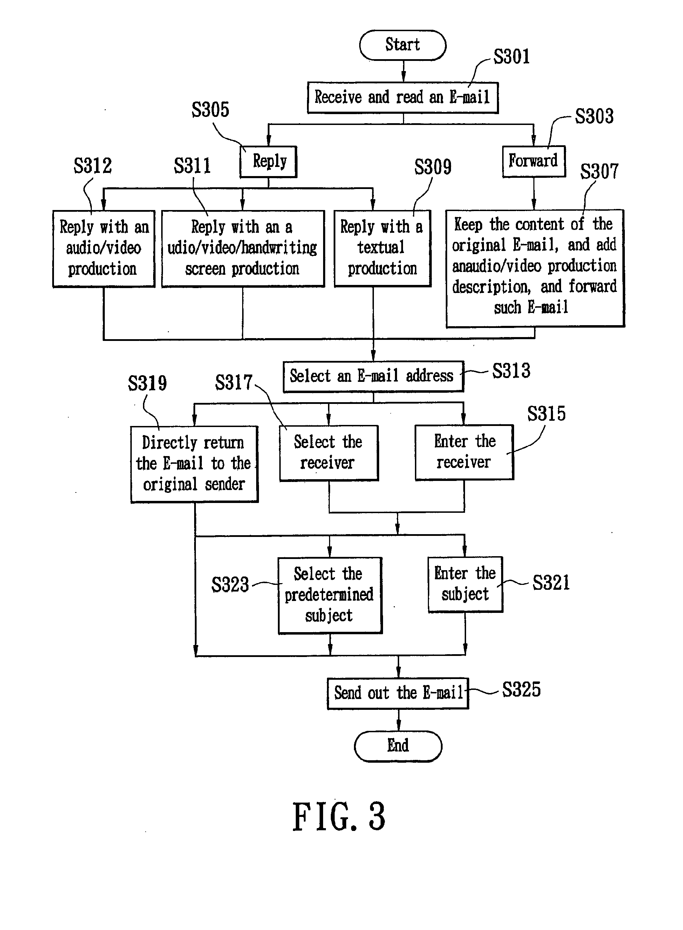

Further, the way of producing an E-mail as shown in Fig. 3 can be accomplished by using the selecting module 10 to select a content template E-mail. A text input module 14, a handwriting edit module 17, an audio/video edit module 18 and/or a screen capture module 19 can further be executed, allowing a user to add texts, handwriting signals and/or audio/video files to the E-mail. These handwriting signals and audio/video files need not be entered by users from a keyboard, and thus can achieve the same effect of quickly producing E-mail.

Reference is made to Fig. 3 for the flow chart of replying/forwarding a received E-mail according to a preferred embodiment of the present invention. In Fig. 3, the flow chart comprises the steps of(S301) receiving and reading an E-mail; (303) forwarding the received E-mail; or (S305) replying the received E-mail; (307) keeping the content of the original E-mail and adding an audio/video description to the E-mail, and then forwarding the E-mail, if a user decides to forward the E-mail, and the audio/video description is completed by the audio/video edit module 18; (S309) replying to E-mail with a textual content, if a user decides to replay the E-mail; or (S311) replying the E-mail with an audio/video/handwriting screen; or (S312) replying the E-mail with an audio/video production. The audio/video production is completed by the audio/video edit module 18, and the handwriting screen is completed by the handwriting signals entered by the handwriting edit module 17 and the operating screen captured by the screen capture module 19, and Step (S311) is applicable if the content of the original E-mail is a textual content, and Step (S312) is applicable if the content of the original E-mail is an audio/video content. After the forwarded content or the replied content is produced, the flow chart further comprises a step of (S313) selecting a receiver's E-mail address to determine the E-mail address to where the E-mail is sent.

After Step (S313) is completed, the flow chart further comprises the steps of (S315) directly entering the receiver's data, if the previous received E-mail is selected to be forwarded; or (S317) selecting a mail list from the directory 165 as the receiver name list; (321) directly entering the subject; or (S323) selecting the subject template from the subject database 161; and finally forwarding the E-mail with the foregoing forwarded content, receiver's data and subject produced by the producing module.

After Step (S313) is completed, the flow chart further comprises a step of (S319) directly replying the original E-mail to the sender, if the previous received E-mail is selected to be replied to, or simultaneously sending a carbon copy to other receivers; (S321) or entering the subject or (S322) selecting a subject template, and finally sending out the replied E-mail with the foregoing replied content and subject produced by the producing module 12.

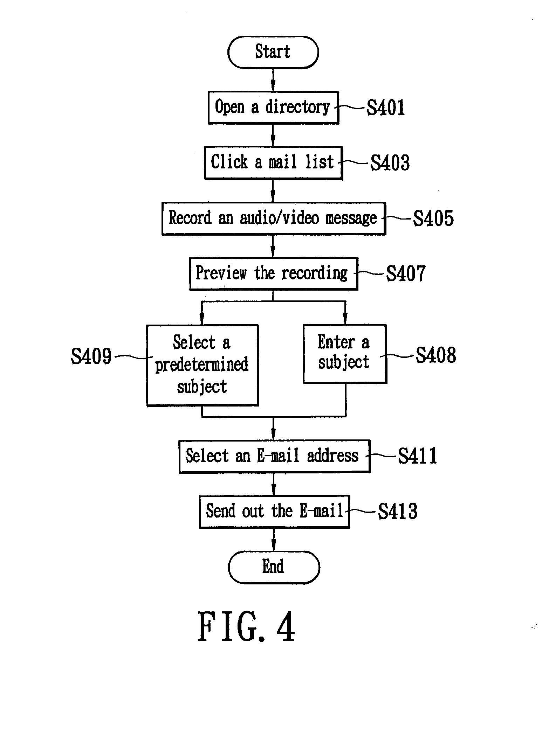

Reference is made to Fig. 4 for the flow chart of producing an E-mail by a directory according to a preferred embodiment of the present invention. In Fig. 4, the flow chart comprises the steps of (S401) opening a directory; (S403) selecting a mail list from the directory; (405) recording an audio/video message by the audio/video edit module 18; (S407) previewing the recorded result; (S408) entering a subject, or (S409) selecting a subject from the subject database 161; (S411) selecting an E-mail address, and finally producing an email produced by the producing module 12 according to the foregoing procedures. The audio/video message described in Step (S405) is used as the content of the E-mail, and the subject described in Step (S408) or Step (S409) is used as the subject of the E-mail, and the E-mail is sent to the receivers listed in the mail list selected in Step (S403). After the procedure as illustrated in Fig 4 is completed, a user also can directly carry out the audio/video conversation with the opposite parties selected from the mail list via a network.

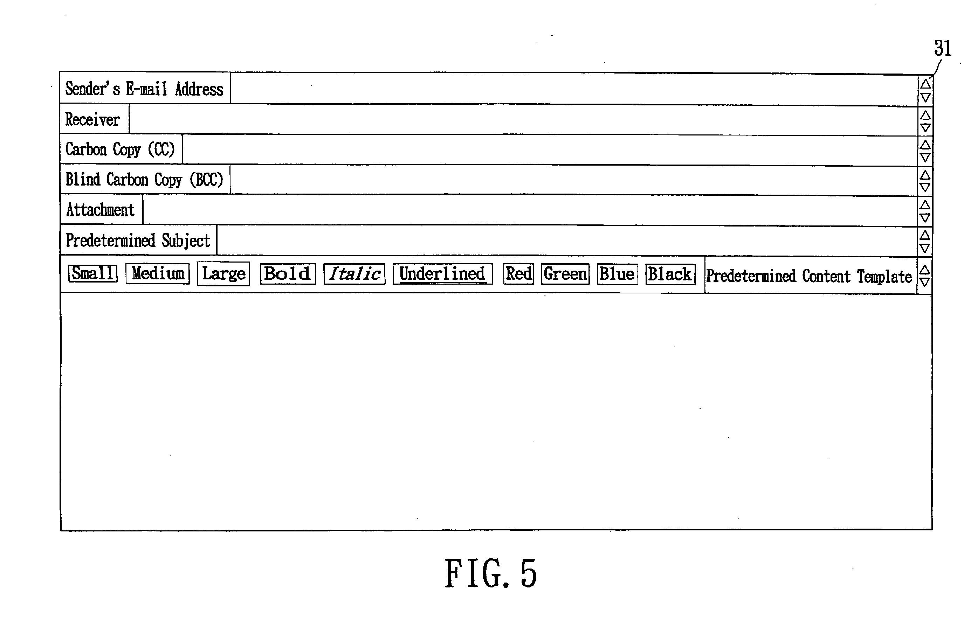

Reference is made to Fig. 5 for the schematic view of an E-mail produced according to the present invention. The E-mail produced according to this embodiment provides includes an E-mail address item, a receiver item, a carbon copy receiver item, a blind carbon copy receiver item, an attachment item, a subject item and a content template item, and each item goes with a pull-down menu 31 for selecting the predetermined data for each item. Of course, each item can be entered directly by users as well. Therefore, the E-mail producing system 1 provided by this embodiment allows users to complete quickly the production of an E-mail.

In summation of the above description, a system and method of producing E-mail in accordance with the preferred embodiment of the present invention can use some of the steps or a combination of the steps to produce E-mail, such as using a selecting module 10 to select the desired E-mail content from different databases stored in the storage module 16, directly using a text input module 14 to input texts, using a handwriting edit module 17 to enter handwriting signals, or using an audio/video edit module 18 to input audio/video signals. Therefore, the present invention can reduce the number and episodes of keying in the keyboard, so as to expedite the production of an E-mail.

Although the present invention has been described with reference to the preferred embodiments thereof, it will be understood that the invention is not limited to the details thereof. Various substitutions and modifications have been suggested in the foregoing description, and others will occur to those of ordinary skill in the art. Therefore, all such substitutions and modifications are intended to be embraced within the scope of the invention as defined in the appended claims.

## Claims

1. A system for producing E-mail, comprising:
a subject database, for storing a plurality of predetermined subject templates;
an E-mail content database, for storing a plurality of predetermined content templates;
a selecting module, for selecting contents of said subject database and said E-mail content database; and
a producing module, for controlling said selecting module to select one of said predetermined subject templates and one of said predetermined content templates to form an E-mail.

2. The system of producing E-mail of claim 1, further comprising:
an attached file database, for storing a plurality of attached file templates to be selected by said selecting module and said producing module controlling said selecting module to select at least one of said attached file templates to form said E-mail.

3. The system of producing E-mail of claim 1, further comprising:
a directory, for storing a plurality of mailing lists to be selected by said selecting module, said producing module controlling said selecting module to select at least one mailing list to form said E-mail.

4. The system of producing E-mail of claim 1, further comprising:
an E-mail address database, for storing a plurality of E-mail addresses to be selected by said selecting module and controlled by said producing module to select one of said E-mail addresses to form said E-mail.

5. The system of producing E-mail of claim 1, further comprising a text input module for users to enter a textual data, wherein said text input module is controlled by said producing module to integrate said text data entered by said text input module into said E-mail.

6. The system of producing E-mail of claim 1, further comprising a handwriting edit module for capturing a handwriting signal entered by users, wherein said handwriting edit module converts said handwriting signal to a digital signal readable by a computer, and said producing module attaches said digital signal into the said E-mail.

7. The system of producing E-mail of claim 1, further comprising an audio/video edit module for activating an image capture device and a sound capture device to capture the input of a video signal and an audio signal, wherein said audio/video edit module integrates said video and audio signals into an audio/video file, and said producing module attaches said audio/video file into said E-mail.

8. The system of producing E-mail of claim 1, further comprising:
a screen capture module for capturing a current operating screen of a computer, wherein if said producing module produces a new E-mail, said screen capture module captures a desktop displayed by said current computer as a graphic file for said operating screen, and if said producing module replies to or forwards an E-mail, said screen capture module captures a whole content of the original E-mail as a graphic file for said operating screen.

9. A method of producing E-mail, comprising the steps of:
providing an E-mail;
selecting one of a plurality of predetermined subject templates on said E-mail;
selecting one of a plurality of predetermined content templates on said E-mail; and
producing said E-mail according to selected results, wherein said selected predetermined subject template is used as a subject of said E-mail, and said selected predetermined content template is used as a content of said E-mail.

10. The method of producing E-mail of claim 9, wherein said provided E-mail is a new E-mail.

11. The method of producing E-mail of claim 9, wherein said selected subject template and said selected content are selected from a pull-down menu.

12. The method of producing E-mail of claim 9, further comprising the step of selecting at least one of a plurality of mail lists on said E-mail, and said selected mail list is the receiver name list of said E-mail.

13. The method of producing E-mail of claim 12, wherein said at least one selected from said plurality of mail lists is selected by a pull-down menu.

14. The method of producing E-mail of claim 9, further comprising the step of selecting one of said plurality of E-mail addresses on said E-mail, wherein said selected E-mail address is used as a senders' E-mail address for sending out said E-mail.

15. The method of producing E-mail of claim 14, wherein said one E-mail address selected from said plurality of E-mail addresses is selected by a pull-down menu.

16. The method of producing E-mail of claim 9, further comprising one of said plurality of attached file templates on said E-mail, wherein said selected attached file is an attachment of said E-mail.

17. The method of producing E-mail of claim 16, wherein said one attached file template selected from said plurality of attached file templates is selected by a pull-down menu.

18. The method of producing E-mail of claim 9, further comprising the step of entering the textual information for said E-mail.

19. The method of producing E-mail of claim 18, wherein said entered textual information includes subject, content, receiver, and/or sender's E-mail address of said E-mail.

20. The method of producing E-mail of claim 9, further comprising the step of entering a handwriting signal to said E-mail through a handwriting input device.

21. The method of producing E-mail of claim 20, wherein said handwriting signal is entered into said E-mail by adopting a background of a desktop of a current display computer as a graphic file.

22. The method of producing E-mail of claim 9, further comprising a step of entering an audio/video file having a video signal and an audio signal into said E-mail, and said audio/video file is produced by an image capture device and a sound capture device.

23. A method for producing E-mail, comprising the steps of:
providing an E-mail;
selecting one from a plurality of predetermined subject templates on said E-mail;
entering an audio/video file having a video signal and an audio signal produced by an image capture device and a sound capture device; and
producing said E-mail according to said selected results, wherein said selected predetermined subject template is used as a subject of said E-mail, and said entered audio/video file is used as a content of said E-mail.

24. The method of producing E-mail of claim 23, further comprising the step of selecting at least one from a plurality of mail lists on said E-mail, and said selected mail list is used as a receiver name list of said E-mail.

25. The method of producing E-mail of claim 23, further comprising the step of selecting one of a plurality of E-mail addresses on said E-mail, wherein said selected E-mail address is used as the sender's E-mail address for sending out said E-mail.

26. The method of producing E-mail of claim 23, further comprising the step of entering a handwriting signal into said E-mail through a handwriting input device, wherein said input handwriting signal is the content of said E-mail.

27. The method of producing E-mail of claim 23, wherein said handwriting signal is input to said E-mail by capturing a desktop displayed by said current computer as a graphic file for said operating screen.

28. A method of producing E-mail, comprising the steps of:
reading a received E-mail, wherein the content of said E-mail is a text content;
using an image capture device and a sound capture device to produce and enter an audio/video file having a video signal and an audio signal;
using a handwriting input device to produce and enter a handwriting signal as a reply content of said E-mail, wherein a background adopted by said handwriting signal is captured from a whole content of said E-mail as a graphic file; and
using said audio/video file and said handwriting signal as the reply content of said E-mail and sending said E-mail to an original sender.

29. A method of producing E-mail, comprising the steps of:
reading a received E-mail, wherein the content of said E-mail is an audio/video content;
using an image capture device and a sound capture device to produce and enter an audio/video file having a video signal and an audio signal;
using said audio/video file as a reply content of said E-mail, and sending said E-mail to an original sender.

30. A method of producing E-mail, comprising the steps of:
reading a received E-mail;
using an image capture device and a sound capture device to produce and enter an audio/video file having a video signal and an audio signal; and
using said audio/video file and an original content of said E-mail as a forwarded content of said E-mail, and forwarding said E-mail to at least one receiver.

31. A method of producing E-mail, comprising the steps of:
selecting a mail list from a directory;
recording an audio/video message;
entering a subject;
producing an E-mail according to said audio/video message and said subject, wherein said audio/video message is a content of said E-mail, and said subject is a subject of said E-mail; and
sending said E-mail to said mail list.

32. The method of producing E-mail of claim 31, wherein said subject is selected from a plurality of predetermined subject templates.

33. The method of producing E-mail of claim 31, further comprising the step of selecting an E-mail address, and said E-mail address is used as the sender's E-mail address of said E-mail.
